# EUROPÄISCHE PATENTSCHRIFT

(11) **EP 0 855 971 B1**
(45) Veröffentlichungstag und Bekanntmachung des Hinweises auf die Patenterteilung: **28.03.2001**
(21) Anmeldenummer: 97941978.5
(22) Anmeldetag: 04.09.1997
(51) Int. Cl.: B60Q 1/04, F16B 35/04

(54) **HALTER ZUR VERSTELLBAREN BEFESTIGUNG EINES SCHEINWERFERS AN EINEM FAHRZEUG**
HOLDER FOR ADJUSTABLY SECURING A HEADLIGHT ON A VEHICLE
SUPPORT POUR FIXATION REGLABLE D'UN PHARE SUR UN VEHICULE

(30) Priorität: 09.09.1996 DE 19636527
(43) Veröffentlichungstag der Anmeldung: 05.08.1998
(73) Patentinhaber: Hella KG Hueck & Co., 59552 Lippstadt (DE)
(72) Erfinder: BRUMMEL, Reinhold, D-59609 Anröchte (DE); HILSENBECK, Thomas, D-59597 Erwitte (DE); MAZZIOTTI, Pietro, Antonio, D-59556 Lippstadt (DE); MOHSAKOWSKI, Klaus, D-59558 Lippstadt (DE)
(86) Internationale Anmeldenummer: EP9704808
(87) Internationale Veröffentlichungsnummer: WO9809839

(56) Entgegenhaltungen:
- DE-A- 3 324 134
- FR-A- 533 054
- FR-A- 1 059 698
- FR-A- 2 687 183
- GB-A- 1 033 989
- US-A- 1 446 441

## Beschreibung

Die Erfindung betrifft einen Halter zur verstellbaren Befestigung eines Scheinwerfers an einem Fahrzeug, mit einem Halteansatz, welcher von einem Scheinwerfergehäuse nach außen absteht, mit einem an dem Fahrzeug befestigbaren u-förmigen Haltebügel und mit einem die freien Endabschnitte der Schenkel des u-fömigen Haltebügels verbindenden Spannbolzen, durch welchen der mindestens einen konvexen Mantelflächenabschnitt aurweisende Halteansatz zwischen den Schenkeln des Haltebügels klemmend festsetzbar ist.

Ein solcher Halter zur verstellbaren Befestigung eines Scheinwerfers an einem Fahrzeug ist aus der DE 33 24 134 C2 bekannt geworden. Der Scheinwerfer weist ein aus Kunststoff bestehendes Scheinwerfergehäuse auf, dessen vordere Öffnung durch eine lichtdurchlässige Abschlußscheibe abgeschlossen ist. Der Massenschwerpunkt des Scheinwerfers liegt nahe der Abschlußscheibe, da diese aus Glas hergestellt ist, und bei einem aus Kunststoff hergestellten Scheinwerfergehäuse das schwerste Teil des Scheinwerfers ist. An die Außenseite des Scheinwerfergehäuses ist ein Halteansatz des Halters angeformt. Der Halteansatz weist eine senkrecht zur optischen Achse des Scheinwerfers verlaufende Mittellinie auf und ist zwischen den Schenkeln eines u-förmigen Haltebügels angeordnet. Der Halteansatz des Scheinwerfergehäuses weist ausschließlich auf den den Schenkeln zugewandten Seiten einen konvexen kugelförmigen Flächenabschnitt auf, an dem die Schenkel mit einem konkaven Flächenabschnitt anliegen. Ein Spannbolzen geht durch Öffnungen in den freien Endabschnitten der Schenkel des Haltebügels und durch eine Durchgangsöffnung in den Halteansatz des Scheinwerfergehäuses hindurch. Als Spannbolzen dient eine Schraube, welche mit ihrem Kopf an der Außenseite eines Schenkels anliegt und an dem aus dem anderen Schenkel herausragenden Endabschnitt eine Mutter trägt. Durch die kugelförmigen Flächenabschnitte des Halteansatzes und des Haltebügels ist der Scheinwerfer gegenüber dem Haltebügel in alle Richtungen verstellbar. Nach einem Anziehen der Mutter gegen die Außenseite des ihr benachbarten Schenkels des Haltebügels ist der Halteansatz zwischen den Schenkeln des Haltebügels klemmend festgesetzt. Um den Scheinwerfer in alle Richtungen verstellen zu können, muß die Durchgangsöffnung in dem Halteansatz wesentlich größer sein als der Außendurchmesser des Spannbolzens. Je größer die Durchgangsöffnung in dem Halteansatz ausgeführt ist um so kleiner sind die Abschnitte, mit welchem die kugelförmigen Flächenabschnitte aneinander liegen. Somit ist ein sicherer klemmender Festsitz des Halteansatzes zwischen den Schenkeln des Haltebügels und eine ausreichend großer Verstellung des Scheinwerfers in alle Richtungen nur dann gegeben, wenn der Halter entsprechend groß gestaltet ist. Aus stilistischen Gründen wird meistens jedoch ein Halter gewünscht, welcher von der Vorderseite des Scheinwerfers her gesehen möglichst klein aufbaut.

Aufgabe der Erfindung ist es, den im Oberbegriff des Anspruchs 1 beschriebenen Halter zur verstellbaren Befestigung eines Scheinwerfers an einem Fahrzeug derart zu gestalten, daß auch dann eine ausreichend große Anlagefläche zwischen dem Halteansatz und dem u-förmigen Haltebügel besteht, wenn der Halter wegen dem Befestigungsbolzen weder weiter vom Gehäuse abstehen muß, noch in seinen Abmessungen geschwächt ist und dabei durch einen einzigen Spannbolzen alle drei Winkeldimensionen der Scheinwerferjustierung gleichzeitig arretierbar sind. Diese Aufgabe wird nach der Erfindung dadurch gelöst, daß der Spannbolzen seitlich neben dem Halteansatz freistehende Endabschnitte des Haltebügels verbindet und als Schwenkachse für ein plattenförmiges Halteelement dient, welches zwischen den freien Endabschnitten durch den Spannbolzen klemmend festsetzbar ist, wobei der u-förmige Haltebügel zwischen seinen freistehenden Endabschnitten einen konkaven Flächenabschnitt aufweist, welcher an dem konvexen kugelförmigen Mantelflächenabschnitt des Halteansatzes anliegt. Dadurch kann bei der Dimensionierung des Halteansatzes des Scheinwerfergehäuses die Größe des Spannbolzens unberücksichtigt bleiben.

Der Halteansatz des Scheinwerfergehäuses ist sicher mit dem plattenartigen Halteelemente verbindbar, wenn das plattenartige Halteelement zwischen einer von beiden freistehenden Endabschnitten des Haltebügels beabstandeten Schulter des Spannbolzens und der Innenseite eines Endabschnitts eines Schenkels des Haltebügels klemmend festsetzbar ist. Hierbei ist es zweckmäßig, wenn der Spannbolzen an beiden freien Endabschnitten mit einem Außengewinde versehen ist und eine auf das jeweilige Außengewinde aufgedrehte Mutter trägt, welche an die Außenseite des jeweiligen Schenkels des Haltebügels angrenzt. Nach dem Ausrichten des Scheinwerfers am Fahrzeug sollte zuerst die Mutter angezogen werden, welche das plattenartige Halteelement zwischen der Schulter der Spannschraube und einem Schenkel des Haltebügels klemmend festsetzt. Danach ist die andere Mutter anzuziehen, bis der Halteansatz zwischen den Schenkeln des Haltebügels klemmend festgesetzt ist.

Der Haltebügel verläuft mit seinen Schenkeln und dem die Schenkel verbindenden Steg annähernd in einem gleich großem Abstand zu dem ihm benachbarten Gehäuse, wenn die Mittellinie des Halteansatzes annähernd in einem rechten Winkel zu der an den Halteansatz angrenzenden Außenwand des Scheinwerfergehäuses verläuft.

Der klemmende Festsitz des Halteansatzes zwischen den Schenkeln des Haltebügels ist besonders groß, wenn der u-förmige Haltebügel bis auf seine freistehenden Endabschnitte an der Mantelfläche des Halteansatzes anliegt. Hierbei besteht zwischen dem Haltebügel und dem Halteansatz eine zusammenhängende Anlagefläche. Hierbei ist es weiterhin zweckmäßig, wenn der u-fömige Haltebügel an seiner Innenseite einen zusammenhängenden konkaven kugelförmigen Flächenabschnitt aufweist, welcher sich von einem der Schenkel über den die Schenkel verbindenden Steg bis zu dem anderen Schenkel hin erstreckt und an dem konvexem kugelförmigen Mantelflächenabschnitt des Halteansatzes anliegt. Durch die kugelförmigen Flächenabschnitte des Halteansatzes und des Haltebügels ist der Scheinwerfer in alle Richtungen verstellbar und das um eine Achse schwenkbare Halteelement ermöglicht die Befestigung des Halters an Fahrzeugflächen, welche in jede Richtung verlaufen.

Der Halter baut ausgehend vom Scheinwerfergehäuse so wenig wie möglich auf, wenn der konvexe kugelförmige Mantelflächenabschnitt bis zum freien Ende des Halteansatzes hin verläuft und der u-förmige Haltebügel streifenförmig ausgeführt ist.

Der Halter ist sehr stabil ausgeführt, wenn der Haltebügel und das plattenförmige Halteelement aus Blech bestehen, wobei das plattenförmige Halteelement mit einem zur Öse gebogenen Seitenrand aufweist, und der Spannbolzen durch die Öse hindurchführt.

Bei einer Stellung des Haltebügels, in welcher der Spannbolzen zwischen dem Halteansatz und dem vorderen Rand des Scheinwerfergehäuses angeordnet ist, besteht ein Vorteil, wenn das plattenartige Halteelement in einer unterhalb des Gehäuses geschwenkten Stellung sich mindestens bis unterhalb des vorderen Randabschnitts des Scheinwerfergehäuses erstreckt. Hierbei ist der u-förmige Haltebügel mit einer Seitenfläche, in welcher die beiden Schenkel und der die Schenkel verbindende Steg verläuft, dem Scheinwerfergehäuse zugewandt. Das Halteelement weist nur einen kleinen Abstand zum Scheinwerfergehäuse auf und ist von der Vorderseite des Scheinwerfers her gut erreichbar. Außerdem liegt der Masseschwerpunkt, insbesondere wenn eine lichtdurchlässige Abschlußscheibe des Scheinwerfers aus Glas besteht, oberhalb des plattenförmigen Halteelements.

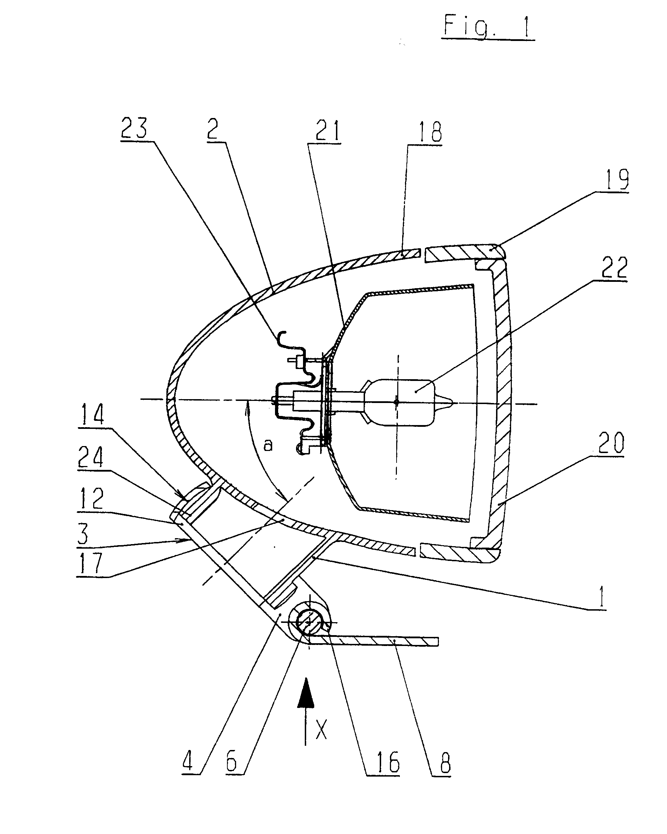

In der Zeichnung sind zwei Ausführungsbeispiele nach der Erfindung dargestellt und zwar zeigt
- Figur 1: einen mittleren vertikalen Längsschnitt durch einen Zusatzscheinwerfer für Fahrzeuge, welcher mit einem Halter an dem Fahrzeug festsetzbar ist;

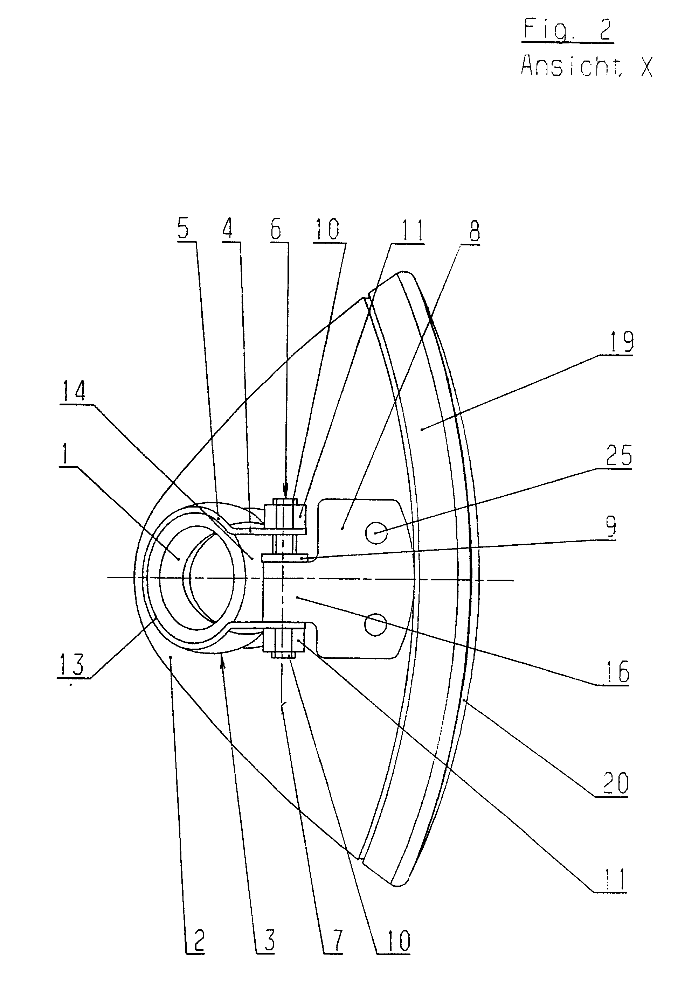

- Figur 2: eine Ansicht aus Richtung X auf den Halter;
- Figur 3: einen mittleren vertikalen Längsschnitt durch einen Zusatzscheinwerfer für Fahrzeuge, welcher mit einem anderen Halter an dem Fahrzeug festsetzbar ist und
- Figur 4: eine Ansicht aus Richtung Y in Figur 3 auf den Halter.

Der Zusatzscheinwerfer weist ein aus Kunststoff bestehendes schalenförmiges Scheinwerfergehäuse (2) auf, dessen vorderer Randabschnitt (18) eine ovale Öffnung des Scheinwerfergehäuses (2) begrenzt. Auf den vorderen Randabschnitt (18) des Scheinwerfergehäuses (2) ist ein Rahmen (19) aufgesetzt, welcher eine aus Glas bestehende ovale lichtdurchlässige Abschlußscheibe (20) umgibt. In das Scheinwerferinnere ist ein schalenförmiger Reflektor (21) eingesetzt, welcher in einer rückwärtigen Öffnung eine Lampe (22) aufnimmt, die durch eine Haltefeder (23) lösbar an dem Reflektor (21) gehaltert ist. An die umlaufende Seitenwand des schalenförmigen Scheinwerfergehäuses (2) ist ein nach außen abstehender hülsenförmiger Halteansatz (1) angeformt, dessen Mittellinie in einem zur Rückseite des Scheinwerfers hin geöffneten spitzen Winkel (a) zur optischen Achse des Scheinwerfers verläuft. Im Inneren des hülsenförmigen Halteansatzes (1) ist in das Scheinwerfergehäuse (2) eine Durchgangsöffnung (17) eingebracht, durch welche eine nicht dargestellte elektrische Leitung hindurchführbar ist. Der hülsenförmige Halteansatz (1) weist an seinem äußeren Randbereich (24) umlaufend einen konvexen kugelförmigen Mantelflächenabschnitt (14) auf, dessen Mittelpunkt auf der Mittellinie des Halteansatzes (1) liegt. Der Halteansatz (1) ist mit seinem Randbereich (24) zwischen den Schenkeln (5) eines u-förmigen Haltebügels (3) angeordnet. Der Haltebügel (3) ist aus einem streifenförmigen Blech gebogen und liegt mit einem konkaven kugelförmigen Flächenabschnitt (12) an dem konvexen kugelförmigen Mantelflächenabschnitt (14) des Halteansatzes (1) an. Der konkave kugelförmige Flächenabschnitt (12) erstreckt sich von einem Schenkel (5) über den die Schenkel (5) verbindenden Steg (13) bis zu dem anderen Schenkel (5) des Haltebügels (3) hin. Somit ist der konkave Flächenabschnitt (12) des Haltebügels (3) zusammenhängend. Der streifenförmige Haltebügel (3) ist breiter als der den konvexen Mantelflächenabschnitt (14) aufweisende Randbereich (24) des Halteansatzes (1) ausgeführt. Dadurch besteht in jeder möglichen Schwenkstellung des Scheinwerfers immer eine ausreichend große Anlagefläche zwischen dem Halteansatz (1) und dem Haltebügel (3). Die freien Endabschnitte (4) der Schenkel (5) des Haltebügels (3) sind freistehend ausgeführt und verlaufen etwa parallel zueinander. In die freistehenden Endabschnitte (4) des Haltebügels (3) ist jeweils eine Öffnung eingebracht, durch welche ein Spannbolzen (6) hindurchführt. Der Spannbolzen (6) weist an seinen Endabschnitten ein Außengewinde (10) auf, welches jeweils in das Innengewinde einer Mutter (11) eingreift. Die beiden Muttern (11) grenzen an die Außenseite des jeweiligen freistehenden Endabschnitts (4) des Haltebügels (3) an. Zwischen den beiden freistehenden Endabschnitten (4) des Haltebügels (3) dient der Spannbolzen (6) zusätzlich als Schwenkachse (7) für ein plattenförmiges Halteelement (8). Das Halteelement (8) ist aus Blech hergestellt und weist an einem Randbereich einen zu einer Öse (16) gebogene Lappen auf. Durch die Öse (16) hindurch führt mit kleinem Spiel der Spannbolzen (6). Zwischen den freistehenden Endabschnitten (4) des Haltebügels (3) weist der Spannbolzen (6) in einem Abstand zu den beiden freistehenden Endabschnitt (4) eine von einem umlaufenden Flansch gebildete Schulter (9) auf, zwischen der und einem freistehenden Endabschnitt (4) des Haltebügels (3) der zu einer Öse (16) gebogene Lappen des plattenförmigen Halteelements (8) angeordnet ist, die Schulter (9) des Spannbolzens (6) ist aus seiner Mitte versetzt angeordnet und der zu einer Öse (16) gebogenen Lappen verläuft in dem Abschnitt des Spannbolzens (6), in welchem die Schulter den größeren Abstand zu einem freien Endabschnitt (4) des Haltebügels (3) aufweist. In das plattenförmige Halteelement (8) sind zwei Befestigungslöcher (25) für Befestigungsbolzen ( nicht dargestellt ) eingebracht. Nach einem Befestigen des plattenförmigen Halteelements (8) an einem Fahrzeugteil, ist der Scheinwerfer in seine gewünschte Lage auszurichten. Zuerst muß die Mutter (11) angezogen werden, welche den zu einer Öse (16) gebogenen Randbereich zwischen der Schulter (9) des Spannbolzens (6) und einem freistehenden Endabschnitt (4) des Haltebügels (3) festsetzt. Danach ist die andere Mutter (11) anzuziehen, um den Halteansatz (1) klemmend zwischen den Schenkeln (5) des Haltebügels (3) festzusetzen.

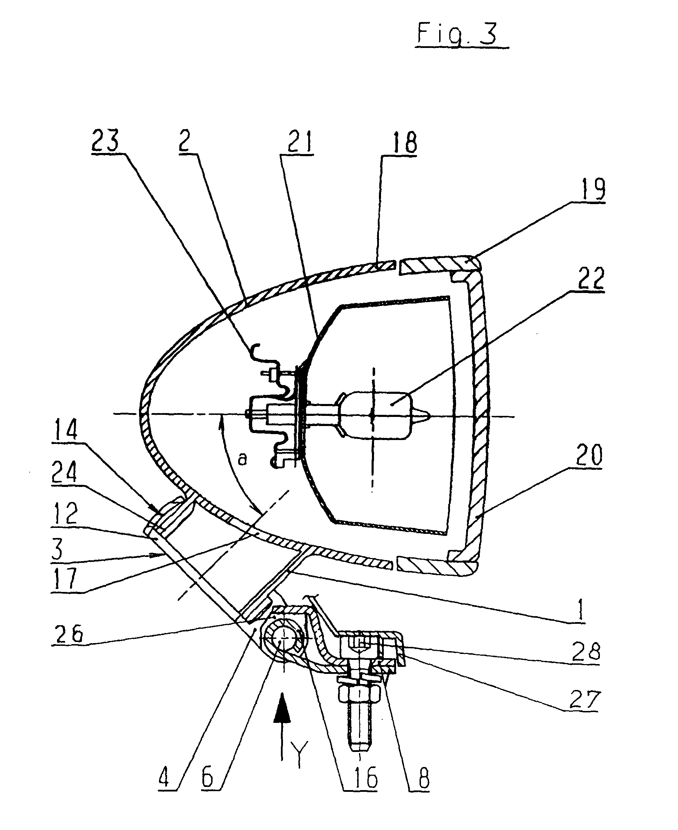

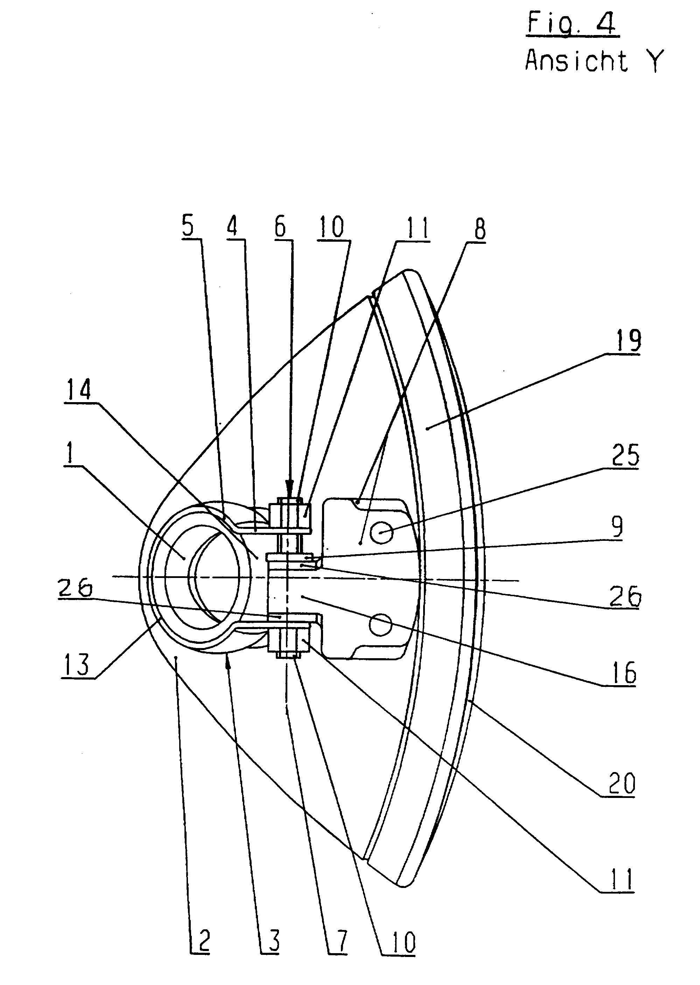

Bei dem in den Figuren 3 und 4 dargestellten Scheinwerfer ist das Halteelement (8) des Halters zweiteilig ausgeführt und die Befestigungslöcher (25) für Befestigungsschrauben (28) gehen durch die beiden aneinanderliegenden plattenförmigen Teile des Halteelements (8) hindurch. Mit den Befestigungsschrauben (28) ist das Halteelement (8) an dem Fahrzeug festsetzbar. Der Teil des zweiteiligen Halteelements (8), welcher an einem Seitenrandabschnitt die Öse (16) aufweist, ist mit seiner Öse (16) zwischen den freien Seitenwänden eines U-förmig gestalteten Seitenrandabschnitts (26) des anderen Teils des zweiteiligen Halteelements (8) angeordnet. Der Spannbolzen (6) ist drehfest mit dem Seitenrandabschnitt (26) des Halteelements (8) verbunden, und zwar greift eine an die Schulter (9) des Spannbolzens (6) angebrachte Nase in eine Aussparung der benachbarten freien Seitenwand des U-förmigen Seitenrandabschnitts (26) ein (nicht dargestellt). Auf das Halteelement (8) ist ein aus Kunststoff bestehendes Abdeckteil (27) aufgesetzt, welches klemmend an den Köpfen der Befestigungsschrauben (28) gehalten ist.

### Bezugszeichenliste

Halter zur verstellbaren Befestigung eines Scheinwerfers an einem Fahrzeug
- 1: Halteansatz
- 2: Scheinwerfergehäuse
- 3: Haltebügel
- 4: Endabschnitte
- 5: Schenkel
- 6: Spannbolzen
- 7: Schwenkachse
- 8: Halteelement
- 9: Schulter
- 10: Außengewinde
- 11: Mutter
- 12: konkaver Flächenabschnitt
- 13: Steg
- 14: konvexer Mantelflächenabschnitt
- 15: Ende
- 16: Öse
- 17: Durchgangsöffnunp
- 18: Randabschnitt
- 19: Rahmen
- 20: Abschlußscheibe
- 21: Reflektor
- 22: Lampe
- 23: Haltefeder
- 24: Randbereich
- 25: Befestigungslöcher
- 26: Seitenrandabschnitt
- 27: Abdeckteil
- 28: Befestigungsschraube

## Patentansprüche

1. Halter zur verstellbaren Befestigung eines Scheinwerfers an einem Fahrzeug, mit einem Halteansatz (1), welcher von einem Scheinwerfergehäuse (2) nach außen absteht, mit einem an dem Fahrzeug befestigbaren u-förmigen Haltebügel (3) und mit einem die freien Endabschnitte (4) der Schenkel (5) des u-förmigen Haltebügels (3) verbindenden Spannbolzen (6), durch welchen der mindestens einen konvexen Mantelflächenabschnitt (14) aufweisende Halteansatz (1) zwischen den Schenkeln (5) des Haltebügels (3) klemmend festsetzbar ist, dadurch gekennzeichnet, daß der Spannbolzen (6) seitlich neben dem Halteansatz (1) freistehende Endabschnitte (4) des Haltebügels (3) verbindet und als Schwenkachse (7) für ein plattenförmiges Halteelement (8) dient, welches zwischen den freistehenden Endabschnitten (4) des Haltebügels (3) durch den Spannbolzen (6) klemmend festsetzbar ist, wobei der u-förmige Haltebügel (3) zwischen seinen freistehenden Endabschnitten (4) einen konkaven Flächenabschnitt (12) aufweist, welcher an dem konvexen Mantelflächenabschnitt (14) des Halteansatzes (1) anliegt.

2. Halter nach Anspruch 1, dadurch gekennzeichnet, daß das plattenartige Halteelement (8) zwischen einer Schulter (9) des Spannbolzens (6) und der Innenseite eines Endabschnitts (4) eines Schenkels (5) des Haltebügels (3) klemmend festsetzbar ist.

3. Halter nach Anspruch 2, dadurch gekennzeichnet, daß der Spannbolzen (6) an seinen beiden freien Endabschnitten mit einem Außengewinde (10) versehen ist und eine Mutter trägt , welche an die Außenseite des jeweiligen Schenkels (5) angrenzt.

4. Halter nach einem der Ansprüche 1 bis 3, dadurch gekennzeichnet, daß der u-förmige Haltebügel (3) an seiner Innenseite einen zusammenhängenden konkaven kugelförmigen Flächenabschnitt (12) aufweist und bis auf seine freistehenden Endabschnitte (4) an der Mantelfläche des Halteansatzes (1) anliegt.

5. Halter nach Anspruch 4, dadurch gekennzeichnet, daß der konvexe kugelförmige Mantelflächenabschnitt (14) bis zum freien Ende (15) des Halteansatzes (1) hin verläuft.

6. Halter nach einem der Ansprüche 1 bis 5, dadurch gekennzeichnet, daß der u-förmige Haltebügel (3) streifenförmig ausgeführt ist.

7. Halter nach einem der Ansprüche 1 bis 6, dadurch gekennzeichnet, daß der Haltebügel (3) und das plattenförmige Halteelement (8) aus Blech bestehen, wobei das plattenförmige Halteelement (8) einen zu einer Öse (16) gebogenen Seitenrand aufweist und der Spannbolzen (6) durch die Öse (16) hindurchführt.

8. Halter nach einem der Ansprüch 1 bis 7, dadurch gekennzeichnet, daß der Halteansatz (1) des Scheinwerfergehäuses (2) hülsenförmig ausgeführt ist und im Inneren eine Durchgangsöffnung (17) für eine zum Scheinwerferinneren hin führende elektrische Leitung aufweist.

9. Halter nach einem der Ansprüche 1 bis 8, dadurch gekennzeichnet, daß das plattenartige Halteelement (8) bei einer Stellung des Haltebügels (3), in welcher der Spannbolzen (6) zwischen dem Halteansatz (1) und dem vorderen Rand des Scheinwerfergehäuses (2) angeordnet ist, in eine Stellung unterhalb des vorderen Randabschnitts (18) des Scheinwerfergehäuses (2) schwenkbar ist.

10. Halter nach einem der Ansprüche 1 bis 9, dadurch gekennzeichnet, daß das Halteelement (8) zweiteilig ausgeführt ist und zwei aneinanderliegende plattenförmige Befestigungsabschnitte aufweist, welche beide mit einem Seitenrandabschnitt (Öse 16 bzw. 26) zwischen den Schenkeln (5) des Haltebügels (3), welcher schellenartig ausgeführt ist, klemmend festsetzbar sind.

11. Halter nach einem der Ansprüche 1 bis 10, dadurch gekennzeichnet, daß auf das plattenförmige Halteelement (8) ein Abdeckteil (27) aufsetzbar ist, welches sowohl zur Abdeckung des plattenförmigen Halteelements (8) als auch des Spannbolzens (6) dient.

## Claims

1. Support for adjustably mounting a headlight to a vehicle, with a fixing lug (1) projecting outwardly from a headlight housing (2), with a U-shaped clamping element (3) attachable to the vehicle and with a clamping pin (6) connecting the arms (5) of the U-shaped clamping element (3), by which pin the fixing lug (1), which has one or more convex planar collar sections (14), is clampable between the arms (5) of the clamping element (3), characterised in that the clamping pin (6) connects free end sections (4) of the clamping element (3) projecting laterally away from the fixing lug (1) and serves as a pivot axis (7) for a plate-like mounting element (8) which is clampable between the free end sections (4) of the clamping element (3) by means of the clamping pin (6), the U-shaped clamping element (3) having a concave planar section (12) between its free end sections, which concave section fits around the convex planar collar section (14) of the fixing lug (1).

2. Support according to Claim 1, characterised in that the plate-like mounting element (8) is clampable between a shoulder (9) of the clamping pin (6) and the inner face of an end section (4) of an arm (5) of the clamping element (3).

3. Support according to Claim 2, characterised in that the clamping pin (6) is provided with an external thread (10) on both its free end sections and carries a nut adjacent to the outer face of the arm (5) at either side.

4. Support according to one of Claims 1 to 3, characterised in that the U-shaped clamping element (3) has on its inner face a continuous concave spherical section (12) and, with the exception of its free end sections (4), fits snugly around the collar section of the fixing lug (1).

5. Support according to Claim 4, characterised in that the convex spherical collar section (14) extends up to the free end (15) of the fixing lug (1).

6. Support according to one of Claims 1 to 5, characterised in that the U-shaped clamping element (3) is formed as a strip.

7. Support according to one of Claims 1 to 6, characterised in that clamping element (3) and the plate-like mounting element (8) consist of sheet metal, the plate-like mounting element (8) having a lateral edge bent to form an eye (16) and the clamping bolt (6) passing through the eye (16).

8. Support according to one of Claims 1 to 7, characterised in that the fixing lug (1) of the headlight housing (2) is formed as a shell and has an internal opening (17) for an electric lead leading inside the headlamp.

9. Support according to one of Claims 1 to 8, characterised in that when the clamping element (3) is in a position in which the clamping bolt (6) is arranged between the fixing lug (1) and the front edge of the headlight housing (2), the plate-like mounting element (8) is pivotable into a position below the front edge section (18) of the headlight housing (2).

10. Support according to one of Claims 1 to 9, characterised in that the mounting element (8) is formed in two parts and has two contiguous plate-like fixing sections, both of which are clampable between the arms (5) of the clamping element (3), which is formed as a strap, by means of lateral edge sections (eyes 16 and 26).

11. Support according to one of Claims 1 to 10, characterised in that a cover (27) can be mounted on the plate-like mounting element (8), which cover serves to cover both the plate-like mounting element (8) and the clamping bolt (6).

## Revendications

1. Support servant à fixer de manière réglable un phare sur un véhicule, comportant une embase de retenue (1) qui fait saillie depuis un boîtier de phare (2) vers l'extérieur, un étrier de retenue (3) en forme de U susceptible d'être fixé au véhicule, et un boulon de serrage (6) reliant les tronçons d'extrémité libres (4) des branches (5) de l'étrier de retenue (3) en forme de U, ledit boulon de serrage permettant d'arrêter, par blocage entre les branches (5) de l'étrier de retenue (3), l'embase de retenue (1) qui présente au moins un tronçon de surface enveloppe (14) convexe, caractérisé en ce que le boulon de serrage (6) relie des tronçons d'extrémité libres (4) de l'étrier de retenue (3), situés librement latéralement à côté de l'embase de retenue (1), et sert d'axe de pivotement (7) à un élément de retenue (8) en forme de plaque susceptible d'être arrêté par le boulon de serrage (6) par blocage entre les tronçons d'extrémité libres (4) de l'étrier de retenue (3), l'étrier de retenue (3) en forme de U présentant entre ses tronçons d'extrémité libres (4) un tronçon de surface (12) concave qui est en appui sur le tronçon de surface enveloppe (14) convexe de l'embase de retenue (1).

2. Support selon la revendication 1, caractérisé en ce que l'élément de retenue (8) en forme de plaque est susceptible d'être arrêté par blocage entre un épaulement (9) du boulon de serrage (6) et la face intérieure d'un tronçon d'extrémité (4) d'une branche (5) de l'étrier de retenue (3).

3. Support selon la revendication 2, caractérisé en ce que le boulon de serrage (6) est pourvu, à ses deux tronçons d'extrémité libres, d'un filetage extérieur (10) et porte un écrou qui est adjacent à la face extérieure de la branche (5) respective.

4. Support selon l'une quelconque des revendications 1 à 3, caractérisé en ce que l'étrier de retenue (3) présente sur sa face intérieure un tronçon de surface (12) continu concave de forme sphérique et repose, à l'exception de ses tronçons d'extrémité libres (4), sur la surface enveloppe de l'embase de retenue (1).

5. Support selon la revendication 4, caractérisé en ce que le tronçon de surface enveloppe (14) convexe de forme sphérique s'étend jusqu'à l'extrémité libre (15) de l'embase de retenue (1).

6. Support selon l'une quelconque des revendications 1 à 5, caractérisé en ce que l'étrier de retenue (3) en forme de U est réalisé en forme de bande.

7. Support selon l'une quelconque des revendications 1 à 6, caractérisé en ce que l'étrier de retenue (3) et l'élément de retenue (8) en forme de plaque sont en tôle, l'élément de retenue (8) en forme de plaque présentant un bord latéral replié pour former un oeillet (16), et en ce que le boulon de serrage (6) traverse l'oeillet (16).

8. Support selon l'une quelconque des revendications 1 à 7, caractérisé en ce que l'embase de retenue (1) du boîtier de phare (2) est réalisée en forme de douille et présente à l'intérieur une ouverture traversante (17) pour un fil électrique menant à l'intérieur du phare.

9. Support selon l'une quelconque des revendications 1 à 8, caractérisé en ce que dans une position de l'étrier de retenue (3) dans laquelle le boulon de serrage (6) est agencé entre l'embase de retenue (1) et le bord antérieur du boîtier de phare (2), l'élément de retenue (8) en forme de plaque (8) est susceptible d'être pivoté jusque dans une position située au-dessous du tronçon de bord (18) antérieur du boîtier de phare (2).

10. Support selon l'une quelconque des revendications 1 à 9, caractérisé en ce que l'élément de retenue (8) est réalisé en deux parties et présente deux tronçons de fixation contigus en forme de plaques qui sont susceptibles d'être arrêtés avec un tronçon de bord latéral (oeillet 16, 26) par blocage entre les branches (5) de l'étrier de retenue (3) qui est réalisé à la manière d'un collier.

11. Support selon l'une quelconque des revendications 1 à 10, caractérisé en ce que sur l'élément de retenue (8) en forme de plaque peut être posée une pièce de recouvrement (27) qui sert à recouvrir aussi bien l'élément de retenue (8) en forme de plaque que le boulon de serrage (6).
